# EUROPÄISCHE PATENTSCHRIFT

(11) **EP 3 388 143 B1**
(45) Veröffentlichungstag und Bekanntmachung des Hinweises auf die Patenterteilung: **09.10.2019**
(21) Anmeldenummer: 17305428.9
(22) Anmeldetag: 10.04.2017
(51) Int. Cl.: B01D 69/12, F16J 3/02

(54) **VERFAHREN ZUM HERSTELLEN EINER ELASTOMER-MEMBRAN**
METHOD FOR PRODUCING AN ELASTOMER MEMBRANE
PROCÉDÉ DE FABRICATION D'UNE MEMBRANE ÉLASTOMÈRE

(43) Veröffentlichungstag der Anmeldung: 17.10.2018
(73) Patentinhaber: GEMÜ Gebr. Müller Apparatebau GmbH & Co. Kommanditgesellschaft, 74653 Ingelfingen (DE)
(72) Erfinder: Müller, Gert, 74653 Künzelsau (DE)
(74) Vertreter: DREISS Patentanwälte PartG mbB

(56) Entgegenhaltungen:
- EP-A1- 2 242 004
- DE-A1-102013 214 304
- US-A1- 2012 058 302

## Beschreibung

Die Erfindung betrifft ein Verfahren zum Herstellen einer Elastomer-Membran wie im Anspruch 1 definiert.

Bei der Einvulkanisation von elektronischen Datenträgern zwischen Schichten bzw. Lagen einer Elastomer-Membran besteht das Problem, dass während des Vulkanisationsvorgangs der elektronische Datenträger zum Rand des Formnests wandern kann. Hierdurch kann es im weiteren Herstellungsprozess oder nach Auslieferung der Membran zu einer Beschädigung des elektronischen Datenträgers kommen.

Aus der DE 10 2013 214 304 A1 ist eine Membran bekannt, die mit einer Membranfläche versehen ist, die einen Funktionsabschnitt der Membran darstellt. Es ist eine Lasche vorgesehen, in welcher ein elektronischer Datenträger angeordnet ist. Die Lasche weist eine obere und eine untere Schicht auf. Der Datenträger ist von den Lagen der Lasche und der oberen und der unteren Schicht umschlossen.

Somit ist es Aufgabe der Erfindung, ein Verschwimmen des elektronischen Datenträgers während der Vulkanisation zu verhindern.

Die der Erfindung zugrunde liegende Aufgabe wird durch ein Verfahren nach dem Anspruch 1 gelöst.

Das Verfahren umfasst ein Anordnen eines elektronischen Datenträgers zwischen zwei Lagen an einer vorbestimmten Position, wobei der elektronische Datenträger zumindest zeitweise mit einer Positionierhilfe verbunden ist. Des Weiteren umfasst das Verfahren ein Formpressen der zwei Lagen mit dem dazwischen angeordneten elektronischen Datenträger, wobei die Positionierhilfe ein Wandern des elektronischen Datenträgers aus der vorbestimmten Position heraus während des Formpressens begrenzt.

Durch die vorgeschlagene Positionierhilfe wird erreicht, dass die Toleranzen bei der Anordnung des elektronischen Datenträgers innerhalb der Elastomer-Membran reduziert werden. D. h., über eine Serie gleichartiger Membrane befindet sich der elektronische Datenträger im Wesentlichen an der gleichen Stelle innerhalb der Membran. Vorteilhaft kann hierdurch der Ausschuss bei der Produktion verringert werden und die Auslesegenauigkeit des elektronischen Datenträgers steigt durch die Gewährleistung der vorbestimmten Position.

Weitergehend kann durch die Einbringung des elektronischen Datenträgers in diesem frühen Fertigungsschritt eine Parametrisierung der nachfolgenden Fertigungsschritte erfolgen. Dies ist insbesondere vorteilhaft, da eine optische Erkennung des Membrantyps aufgrund der üblicherweise dunklen bzw. schwarzen optischen Ausprägung der Membrane nicht möglich ist. Mithin kann der Automatisierungsgrad der Fertigungslinien erhöht werden. Nach Auslieferung der Elastomer-Membran ist auch eine Rückverfolgbarkeit der Elastomer-Membran durch den elektronischen Datenträgerträger sichergestellt.

In einer vorteilhaften Ausführungsform verbleibt die Positionierhilfe nach dem Formpressen zumindest abschnittsweise in der Elastomer-Membran. Hierdurch kann vorteilhaft in die Positionierung des elektronischen Datenträgers bis zum Ende des Formpressens sichergestellt werden.

Eine weitere vorteilhafte alternative Ausführungsform zeichnet sich dadurch aus, dass die Positionierhilfe während des Formpressens entfernt wird. Vorteilhaft verbleibt so kein zusätzliches Material in der Elastomer-Membran. So kann für bestimmte Anwendungsbereiche der Elastomer-Membran eine Zulassung weiteren Materials entfallen.

Eine vorteilhafte Ausführungsform zeichnet sich dadurch aus, dass die Positionierhilfe während des Formpressens zumindest zeitweise den elektronischen Datenträger zu einem Formpress-Werkzeug festgelegt. Vorteilhaft trägt das Formpress-Werkzeug dazu bei, dass die Positionierhilfe den elektronischen Datenträger an der vorbestimmten Position hält.

Eine vorteilhafte Ausführungsform zeichnet sich dadurch aus, dass das Verfahren umfasst: Anordnen des elektronische Datenträgers zwischen zwei ersten Lagen; Formpressen der zwei ersten Lagen mit dem darin angeordneten elektronischen Datenträger zu einer vorvulkanisierten Positionierhilfe; Anordnen der vorvulkanisierten Positionierhilfe zwischen den zwei zweiten Lagen; Formpressen der zwei zweiten Lagen mit der darin angeordneten vorvulkanisierten Positionierhilfe.

Diese vorvulkanisierten Positionierhilfe stellt eine Kapselung für den elektronischen Datenträger bereit. Durch diese Kapselung und die Vorvulkanisierung wird bei dem eigentlichen Vulkanisations-Prozess ein vergrößertes Volumen um den Datenträger bereitgestellt, was vorteilhaft dazu führt, dass ein Verschwimmen des Datenträgers bei der Vulkanisation begrenzt wird.

Eine vorteilhafte Ausführungsform zeichnet sich dadurch aus, dass das Verfahren umfasst: Anordnen der Positionierhilfe mit dem zur Positionierhilfe festgelegten elektronischen Datenträger zwischen den zwei Lagen; Festlegen der Positionierhilfe in Bezug zu einem Formpress-Werkzeug derart, sodass sich der elektronische Datenträger an der vorbestimmten Position befindet; Formpressen der zwei Lagen mit der dazwischen angeordneten Positionierhilfe zu einem Vulkanisat; und Abtrennen eines Austriebs des Vulkanisats und eines Überstands der Positionierhilfe.

Durch die Festlegung der Positionierhilfe zu dem Formpress-Werkzeug ist es möglich, über den gesamten Vulkanisations-Prozess den Datenträger gegenüber dem Formpress-Werkzeug festzulegen und so dafür zu sorgen, dass die vorbestimmte Position des Datenträgers nicht verändert wird. Mithin kann hierdurch eine sehr präzise Anordnung des elektronischen Datenträgers erfolgen, womit Freiheitsgrade bei der Größe der zugeordneten Lasche entstehen, die beispielsweise kleiner ausgelegt werden kann.

Eine vorteilhafte Ausführungsform zeichnet sich dadurch aus, dass die Positionierhilfe eine Kunststoff-Umspritzung des elektronischen Datenträgers ist und den elektronischen Datenträger zumindest abschnittsweise umgibt. Vorteilhaft können so beliebig ausgebildete elektronische Datenträger versehen mit Kunststoff-Umspritzung gegenüber dem Formpress-Werkzeug festgelegt werden.

Eine vorteilhafte Ausführungsform zeichnet sich dadurch aus, dass die Positionierhilfe ein im Wesentlichen starres Leiterplattenmaterial, insbesondere ein Phenoplast, insbesondere ein Epoxidharz, ist, wobei der elektronische Datenträger auf dem Leiterplattenmaterial angeordnet ist. Vorteilhaft wird hierbei das bereits vorhandene Leiterplattenmaterial dazu genutzt, um den elektronischen Datenträger gegenüber dem Formpress-Werkzeug festzulegen.

Eine vorteilhafte Ausführungsform zeichnet sich dadurch aus, dass das Verfahren umfasst: Festlegen des elektronischen Datenträgers zu einem Stützgewebe; Anordnen des Stützgewebes und des damit verbundenen elektronischen Datenträgers zwischen den zwei Lagen; Formpressen der zwei Lagen mit dem dazwischen angeordneten Stützgewebe. Vorteilhaft kann auf diese Art und Weise das Stützgewebe, welches auch weiteren Funktionsabschnitten wie beispielsweise dem Arbeitsbereich zugeordnet sein kann, dazu dienen, eine Bewegung des elektronischen Datenträgers bei der Vulkanisation zu begrenzen.

Eine vorteilhafte Ausführungsform zeichnet sich dadurch aus, dass der elektronische Datenträger zu dessen Festlegung auf das Stützgewebe aufgeklebt wird.

Eine vorteilhafte Ausführungsform zeichnet sich dadurch aus, dass das Verfahren umfasst: Halten des elektronischen Datenträgers an der vorbestimmten Position zu einem Formnest mittels der als Haltemittel ausgebildeten Positionierhilfe; Anordnen der Lagen um den gehaltenen elektronischen Datenträger; erstes Formpressen der zwei Lagen mit dem dazwischen gehaltenen elektronischen Datenträger bis zu einem ersten Vulkanisationsgrad; Entfernen der Positionierhilfe von dem elektronischen Datenträger; und zweites Formpressen der zwei Lagen mit dem dazwischen befindlichen elektronischen Datenträger bis zu einem zweiten Vulkanisationsgrad.

Hierdurch wird vorteilhaft erreicht, dass kein zusätzlicher Fremdkörper in der Elastomer-Membran verbleibt. Durch das Entfernen der Positionierhilfe während des Vulkanisationsprozesses wird vorteilhaft erreicht, dass eine Phase, in der das Verschwimmen des elektronischen Datenträgers 4 droht, durch das Festlegen des Datenträgers 4 während dieser Vulkanisations-Phase übersprungen wird. Erst nach dieser Vulkanisations-Phase wird die Positionierhilfe entfernt und der Datenträger 4 wird so vor einer Bewegung aus der vorbestimmten Position heraus geschützt.

Eine vorteilhafte Weiterbildung zeichnet sich dadurch aus, dass das die Positionierhilfe zwei Halteschieber umfasst, welche zwischen dem ersten und zweiten Formpressen voneinander wegbewegt werden. So kann auf einfache Art und Weise der elektronische Datenträger zu dem Formpress-Werkzeug festgelegt werden.

Eine vorteilhafte Ausführungsform zeichnet sich dadurch aus, dass der elektronische Datenträger in einem Bereich der Elastomer-Membran, insbesondere in einem Bereich einer von einer Schmalseite der Elastomer-Membran abstehenden Lasche, angeordnet wird, welcher sich von einem Funktionsabschnitt zum Stellen eines Prozessfluids und von einem Klemmbereich zum Verklemmen der Membran unterscheidet.

Weitere Merkmale und Vorteile der Erfindung sind in den Ausführungsbeispielen gezeigt, die nachfolgend in Bezug zu den Figuren der Zeichnung beschrieben sind. Auch bei unterschiedlichen Ausführungsformen sind Merkmale mit den gleichen Bezugszeichen versehen, ohne dass hierauf nochmals explizit hingewiesen wird. In der Zeichnung zeigen:
Figuren 1,4, 8, 12 und 15 jeweils ein schematisches Ablaufdiagramm;
Figur 3 eine schematische perspektivische Draufsicht auf eine Elastomer-Membran; und

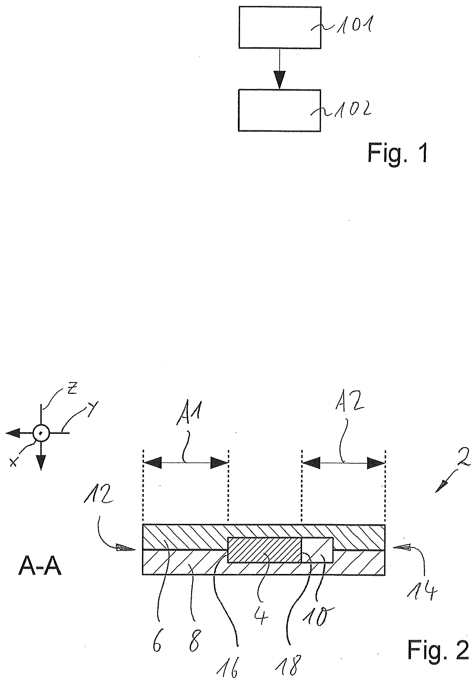

Figuren 2, 5, 6, 7, 9, 10, 11, 13, 14 und 16-19 jeweils einen schematischen Schnitt.

Figur 1 zeigt ein schematisches Ablaufdiagramm für ein Verfahren zum Herstellen einer Elastomer-Membran. In einem ersten Schritt 101 wird ein elektronischer Datenträger zumindest zeitweise zwischen zwei Lagen an einer vorbestimmten Position angeordnet. Der elektronische Datenträger ist mit einer Positionierhilfe verbunden. In einem zweiten Schritt 102 werden die zwei Lagen mit dem dazwischen angeordneten elektronischen Datenträger formgepresst, wobei die Positionierhilfe ein Wandern des elektronischen Datenträgers aus der vorbestimmten Position heraus während des Formpressens begrenzt.

Bei den beiden vorgenannten Lagen handelt es sich um Rohling-Lagen, welche als Ausgangsmaterial zur Vulkanisation und damit zur Herstellung der Elastomer-Membran dienen. Die beiden Lagen werden gemäß einem Schnittmuster aus Rohgummi-Bahnen ausgeschnitten.

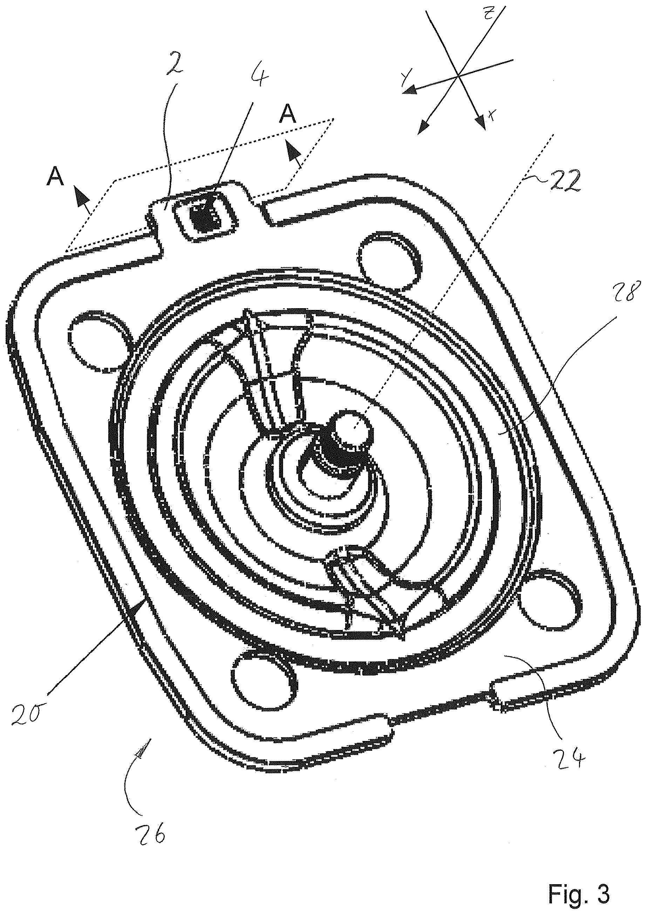

Figur 2 zeigt einen schematischen Schnitt A-A aus der nachfolgenden Figur 3. Der Schnitt A-A zeigt eine Lasche 2 der Elastomer-Membran, wobei der der elektronische Datenträger 4 zwischen zwei Lagen 6 und 8 angeordnet ist.

Nach einer erfolgten Vulkanisation verschmelzen die zwei Lagen 6 und 8 miteinander und sind in der fertig vulkanisierten Elastomer-Membran möglicherweise nicht mehr voneinander unterscheidbar. Die Positionierhilfe 10 ist zumindest zeitweise zwischen den zwei Lagen 6 und 8 angebracht und mit dem Datenträger 4 mechanisch verbunden, um die Bewegung des Datenträgers 4 aus der gezeigten Position heraus zu begrenzen.

Die Lasche 2 ist insbesondere eine Flachlasche mit zwei sich gegenüberliegenden Schmalseiten 12 und 14. Die vorbestimmte Position des Datenträgers 4 zeichnet sich beispielsweise dadurch aus, dass ein Abstand A1 einer Schmalseite 16 des Datenträgers 4 zu der Schmalseite 12 der Lasche 2 im Wesentlichen gleich groß ist wie ein Abstand A2 einer der Schmalseite 16 gegenüberliegenden Schmalseite 18 zu der Schmalseite 14 der Lasche 2.

Figur 3 zeigt eine perspektivische Ansicht einer Elastomer-Membran 20, welche im Wesentlichen rotationssymmetrisch um eine Zustellachse 22 aufgebaut ist. Der Körper der Elastomer-Membran 20 ist im Wesentlichen aus einem Elastomer gefertigt, kann aber selbstverständlich weitere Materialien enthalten. Unter einem Elastomer ist ein Formstoff wie Naturkautschuk oder Synthese-Kautschuk zu verstehen, welcher in einem ausreichenden GebrauchsTemperaturbereich um Raumtemperatur sich weichgummielastisch verhält. Geringe Spannungen bewirken beträchtliche Verformungen, nach Aufhebung der Spannung stellen diese sich bis nahezu auf die ursprünglichen Dimensionen zurück. Synthese-Kautschuk sind Polymere, die bei der Verarbeitung nach Verfahren der Kautschuk-Technologie zulässt um ihren mit weiten Temperatur-Anwendungsbereichen chemisch lose vernetzt werden. Die Vernetzungsreaktion nennt man Vulkanisation. In dieser Beschreibung wird auf ein diskontinuierliches Formpress-Verfahren Bezug genommen, bei dem die Kautschuk-Rohlinge in Form der zumindest zwei Lagen 6 und 8 in eine Ausnehmung bzw. ein Formnest eingebracht werden und dort die zumindest zwei Formhälften unter Druck und erhöhter Temperatur die Vulkanisation des eingelegten Kautschuks ermöglichen.

Die Membran 20 ist dazu vorgesehen, zwischen einem Antriebskörper und einem Ventilkörper des Membranventils angeordnet zu werden. In einem radial äußeren Klemmabschnitt 24 wird die Membran 20 Fluid-dicht zwischen Antriebskörper und Ventilkörper verklemmt. Entlang der Zustellachse 22 wird die Membran 20 bewegt. Bei der Bewegung entlang der Zustellachse 22 bewirkt die Membran 20 ein Öffnen bzw. Schließen eines Fluidkanals in dem Ventilkörper. Hierbei ist eine Mediumseite 26 der Membran 20 in Kontakt mit dem gestellten Prozessfluid. Alternativ kann sich an die Mediumseite 26 eine weitere Membran, beispielsweise eine PTFE-Membran anschließen, wobei die Mediumseite 26 hierbei nicht in direktem Kontakt mit dem Prozessfluid steht. Parallel zu einer xy-Ebene spannt die Membran 20 eine Membranebene auf. Die Membran 20 weist die in der Membranebene von einer Schmalseite der Membran 20 abragende Lasche 2 auf. Ein zur Bewegung der Membran 20 vorgesehener Arbeitsabschnitt 28 der Membran 20 ist radial innerhalb des Klemmabschnitts 24 angeordnet. Die Lasche 2 hingegen ist radial außerhalb des Klemmabschnitts 24 angeordnet.

Innerhalb der Lasche 2 der Membran 20 ist der elektronische Datenträger 4 zwischen den zwei Lagen eingebettet, wobei vorliegend die Figur 3 im Bereich des Datenträgers 4 geöffnet dargestellt ist. Der Datenträger 4 ist flächig und insbesondere Scheiben-förmig ausgebildet und liegt mit der von ihm aufgespannt Ebene im Wesentlichen in der Membranebene bzw. in einer Laschenebene. Der elektronische Datenträger 4 ist insbesondere ein RFID-Chip, der einen Transponder aufweist, mittels dem Daten unter Zuhilfenahme eines in der Nähe des Datenträgers 4 angeordneten Lesegeräts von dem Datenträger 4 ausgelesen und gegebenenfalls auch in den Datenträger 4 eingeschrieben werden können.

Die in dieser Beschreibung genannten Lagen können jeweils auch als Kautschuk-Zuschnitt bezeichnet werden. Ein derartiger Kautschuk-Zuschnitt wird ausgeschnitten und überdeckt beispielsweise in Form der Lagen 6 und 8 Bereiche, welche zur Herstellung der Lasche 2, des Klemmbereichs 24 und des Funktionsabschnitts 28 vorgesehen sind. Selbstverständlich sind auch andere Varianten zur Herstellung entsprechender Zuschnitte denkbar.

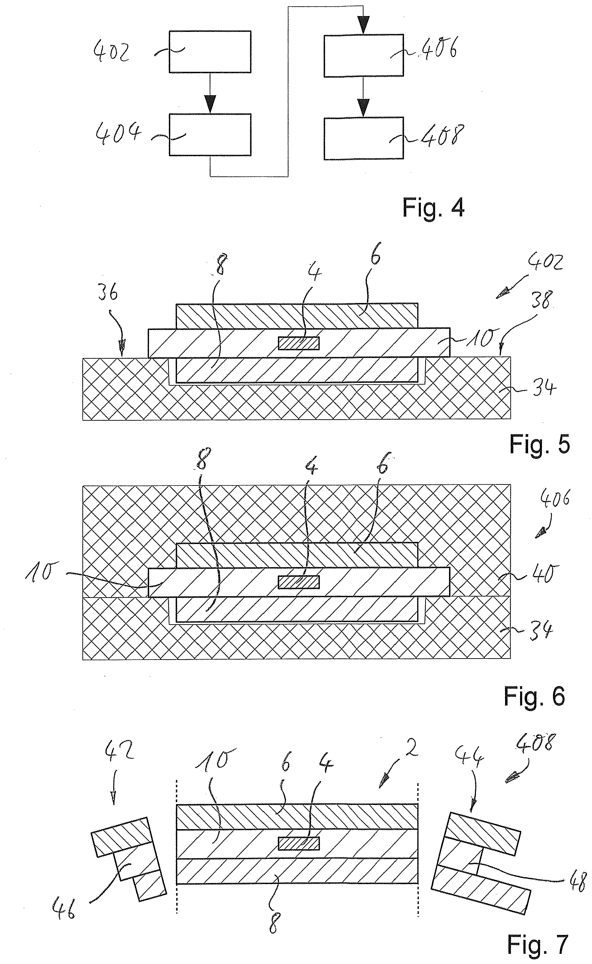

Figur 4 zeigt ein schematisches Ablaufdiagramm. In einem Schritt 402 wird die Positionierhilfe 10 mit dem zur Positionierhilfe 10 festgelegten elektronischen Datenträger 4 zwischen den zwei Lagen 6 und 8 angeordnet. In einem Schritt 404 wird die Positionierhilfe 10 in Bezug zu einem Formpressen-Werkzeug derart festgelegt, sodass sich der elektronische Datenträger 4 an der vorbestimmten Position befindet. In einem Schritt 406 werden die zwei Lagen 6 und 8 mit der dazwischen angeordneten Positionierhilfe 10 zu einem Vulkanisat formgepresst. In einem Schritt 408 wird ein Austrieb des Vulkanisats und ein Überstand der Positionierhilfe abgetrennt und die Lasche 2 entsteht.

Figur 5 zeigt einen Schnitt analog zu dem Schnitt A-A aus Figur 3 zur Erläuterung des Schritts 402. Innerhalb der Positionierhilfe 10 ist der Datenträger 4 eingeschlossen. Die Positionierhilfe ist beispielsweise stabförmig ausgebildet. Selbstverständlich kann der Datenträger 4 auch nur teilweise von der Positionierhilfe 10 umgeben sein bzw. von dieser getragen werden. In dem Schritt 402 wird die Positionierhilfe 10 zwischen den zwei Lagen 6 und 8 angeordnet. Dieser Aufbau wird in einer ersten Formhälfte 34 angeordnet, wobei die Positionierhilfe 10 in Halteabschnitten 36 und 38 auf der ersten Formhälfte 34 aufliegt.

Figur 6 zeigt einen Schnitt analog zu dem Schnitt A-A aus Figur 3 zur Erläuterung des Schritts 406. Eine zweite Formhälfte 40 weist Ausnehmungen auf, in welche die Positionierhilfe 10 eingreift und dadurch die Positionierhilfe fest in dem Formnest gehalten wird. Nach dem Festlegen der Positionierhilfe 10 in Bezug zu dem Formpress-Werkzeug bestehend aus der ersten Formhälfte 34 und der zweiten Formhälfte 40 gemäß dem Schritt 404 findet die Formpressung der zwei Lagen 8 und 6 mit der dazwischen angeordneten Positionierhilfe 10 statt.

Bei diesem Formpressvorgang gemäß dem Schritt 406 werden die zwei Formhälften 34 und 40 aufeinander zu bewegt und während einer Zeitdauer von 3-10 Minuten einem Druck ausgesetzt. Gleichzeitig weisen die Formhälften 34 und 40 auf eine Temperatur zwischen 160 °C und 180 °C auf, welche auf das Vulkanisat übertragen wird. Diese Angaben gelten auch für die anderen Formpressens-Schritte in dieser Beschreibung.

Figur 7 zeigt einen Schnitt analog zu dem Schnitt A-A aus Figur 3 zur Erläuterung des Schritts 408. Bei dem Formpressvorgang beginnt das Material der Lagen 8 und 6 zu fließen, verbindet sich unter anderem miteinander und nimmt die durch die Formhälften 34 und 40 vorgegebene Form an. Hierbei fließt das Material auch weiter nach außen als es die Form der späteren Elastomer-Membran 20 vorsieht. Dieses nach außen geflossene Material wird auch Austrieb genannt. In dem Schritt 408 wird der Austrieb 42, 44 des Vulkanisats und der Überstand 46, 48 abgetrennt und es entsteht die Lasche 2. Im gezeigten Schnitt der Figur 7 ergibt sich eine beidseitig bündige Abtrennung der beiden Lagen 8 und 6 sowie der Positionierhilfe 10, welche vorliegend zu einem Teil d. h. abschnittsweise in der Elastomer-Membran 20, insbesondere innerhalb der Lasche 2, verbleibt.

In einer ersten Ausführungsform ist die Positionierhilfe 10 eine Kunststoff-Umspritzung des elektronischen Datenträgers 4. Hierzu wird der elektronische Datenträger 4 in einem Schritt vor dem Schritt 402 mit einem geeigneten wärmebeständigen Kunststoff umspritzt.

In einer alternativen Ausführungsform befindet sich der elektronische Datenträger 4 auf einer Leiterplatte, womit die Positionierhilfe 10 im Wesentlichen ein starres Leiterplattenmaterial umfasst. Der elektronische Datenträger 4 ist hierbei auf dem Leiterplattenmaterial angeordnet. Selbstverständlich muss der elektronische Datenträger 4 hierbei nicht gänzlich von dem Leiterplattenmaterial umschlossen sein.

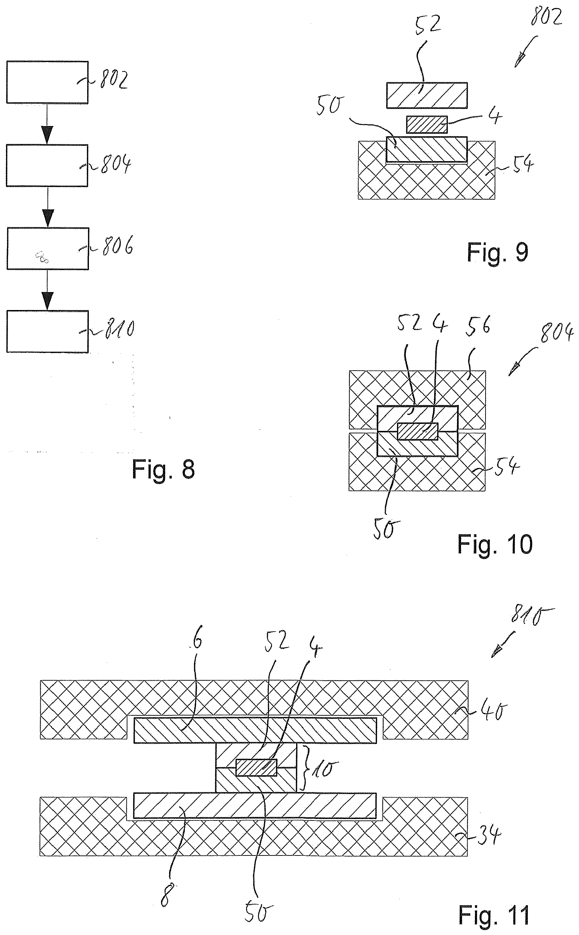

Figur 8 zeigt ein schematisches Ablaufdiagramm. In einem Schritt 802 wird der elektronische Datenträger 4 zwischen zwei ersten Lagen angeordnet. In einem Schritt 804 wird durch Formpressen der zwei ersten Lagen eine vorvulkanisierten Positionierhilfe hergestellt. Die vorvulkanisierten Positionierhilfe wird in einem Schritt 806 zwischen den zwei zweiten Lagen zur Herstellung der Elastomer-Membran 20 angeordnet. In einem Schritt 810 werden die zwei zweiten Lagen mit der darin angeordneten vorvulkanisierten Positionierhilfe formgepresst.

Figur 9 zeigt einen Schnitt analog zu dem Schnitt A-A der Figur 3 zur Erläuterung des Schritts 802. Der elektronische Datenträger 4 wird zwischen den ersten Lagen 50 und 52 angeordnet, wobei die beiden Lagen 50 und 52 ein Ausgangsmaterial für die anschließende Vorvulkanisation umfassen. Dieser Schichtaufbau wird nun in einer weiteren ersten Formhälfte 54 angeordnet.

Figur 10 zeigt ein Schnitt analog zu dem Schnitt A-A der Figur 3 zur Erläuterung des Schritts 804. Eine weitere zweite Formhälfte 56 schließt den Aufbau aus den beiden Lagen 50 und 52 sowie den zwischen den beiden Lagen 50 und 52 angeordneten Datenträger 4 ein. Mittels der Formhälften 54 und 56 wird eine vor Vorvulkanisation durchgeführt, um den Datenträger 4 zwischen den beiden Lagen 50 und 52 einzukapseln. Die von den beiden Lagen 50 und 52 um den Datenträger 4 gebildete Kapsel bildet die Positionierhilfe 10.

Figur 11 zeigt ein Schnitt analog zu dem Schnitt A-A der Figur 3 zur Erläuterung des Schritts 810. In dem Schritt 810 ist die Positionierhilfe 10 in Form einer vorvulkanisierten Kapsel zwischen die Lagen 8 und 6, welche auch als zweite Lagen bezeichnet werden, eingebracht und es erfolgt die Endvulkanisation zur Herstellung der Elastomer-Membran 20.

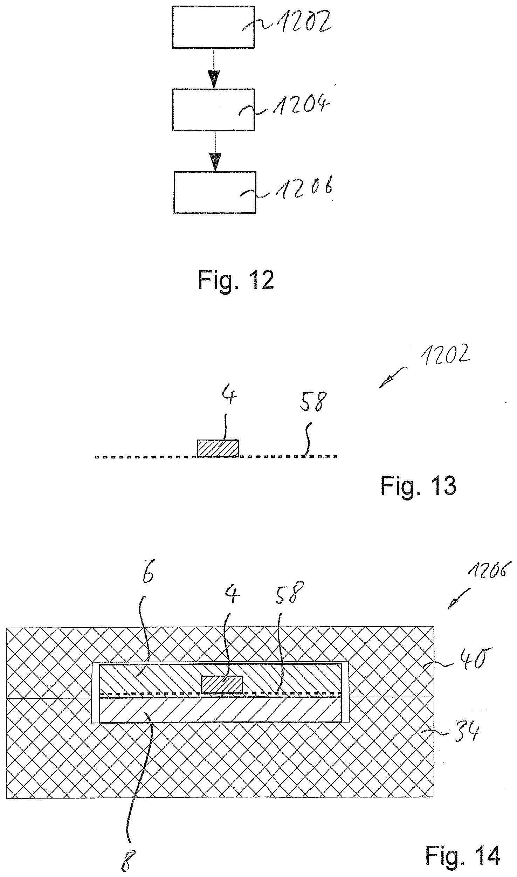

Figur 12 zeigt ein schematisches Ablaufdiagramm. In einem Schritt 1202 wird der elektronische Datenträger 4 zu einem Stützgewebe festgelegt. In einem Schritt 1204 werden das Stützgewebe und der mit dem Stützgewebe verbundene elektronische Datenträger 4 zwischen den zwei Lagen 6 und 8 angeordnet. In einem Schritt 1206 findet eine Formpressung der zwei Lagen 6, 8 mit dem dazwischen angeordneten Stützgewebe und dem darauf angeordneten Datenträger 4 statt.

Figur 13 zeigt in einem Schnitt die Anordnung des Datenträgers 4 auf dem Stützgewebe 58, welches sich ausgehend von der Lasche 2 bis in den herzustellenden Funktionsabschnitt 28 der Elastomer-Membran 20 hinein erstreckt. Das Stützgewebe 58 hat die primäre Funktion einer Beschädigung bzw. Zerstörung des Funktionsabschnitts 28 vorzubeugen. Die weitere Funktion des Stützgewebes 58 ist die Begrenzung der Bewegung des elektronischen Datenträgers 4 während der Vulkanisation. Bevorzugt wird der Datenträger 4 mit dem Stützgewebe 58 verklebt. Es sind aber selbstverständlich auch andere Formen der Festlegung des Datenträgers 4 zu dem Stützgewebe 58 denkbar.

Figur 14 zeigt einen Schnitt zum Schnitt A-A der Figur 3 zur Erläuterung des Schritts 1206. Zwischen den beiden Formhälften 34 und 40 des Formpress-Werkzeugs ist die aus Figur 13 gezeigte Anordnung von den beiden Lagen 6 und 8 umgeben angeordnet. In einer Ausführungsform ist das Stützgewebe 58 nicht zu einer der Formhälften 34 und 40 festgelegt. In einer alternativen Ausführungsform wird das Stützgewebe 58 während des Formpress-Vorgangs durch ein entsprechendes Haltemittel an zumindest einer der Formhälften 34 und 40 gehalten.

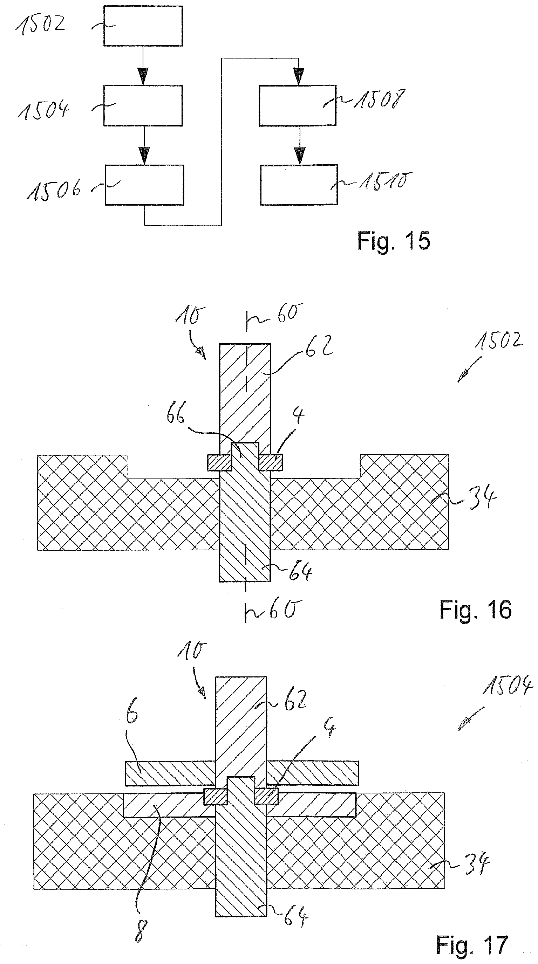

Figur 15 zeigt ein schematisches Ablaufdiagramm. In einem Schritt 1502 wird der elektronische Datenträger 4 an einer vorbestimmten Position zu dem Formnest mittels der als Haltemittel ausgebildeten Positionierhilfe gehalten. In einem Schritt 1504 werden die Lagen 6 und 8 um den gehaltenen elektronischen Datenträger 4 angeordnet. In einem Schritt 1506 werden die zwei Lagen mit dem dazwischen gehaltenen elektronischen Datenträger 4 bis zu einem ersten Vulkanisationsgrad im Sinne einer Vorvulkanisation formgepresst. Die Positionierhilfe 10 wird in einem Schritt 1508 von dem elektronischen Datenträger 4 entfernt. In einem Schritt 1510 werden die zwei Lagen 6 und 8 mit dem dazwischen befindlichen elektronischen Datenträger 4 bis zu einem zweiten Vulkanisationsgrad im Sinne einer Endvulkanisation formgepresst. Unter dem Vulkanisationsgrad ist beispielsweise ein Zeitpunkt während der Vulkanisation und Formpressung zu verstehen. Beispielsweise stellt der zweite Vulkanisationsgrad einen Zeitpunkt bei 100 % der gesamten Zeitdauer der Vulkanisation dar. Der erste Vulkanisationsgrad stellt einen Zeitpunkt zwischen 70-80 % der gesamten Zeitdauer der Vulkanisation dar. Damit wird in dem Schritt 1508 nach 70-80 % der gesamten Zeitdauer der Vulkanisation die Positionierhilfe 10 entfernt.

Figur 16 zeigt einen Schnitt analog zum Schnitt A-A der Figur 3 und dient zur Erläuterung des Schritts 1502. In dem Schritt 1502 wird der elektronische Datenträger 4 in der vorbestimmten Position zu der Formhälfte 34 gehalten. Hierzu umfasst die Positionierhilfe 10 zwei entlang einer Längsachse 60 verschiebliche Schieber 62 und 64. Der elektronische Datenträger 4 weist eine Durchgangsöffnung auf, in welche der Schieber 64 mit einer Nase 66 eingreift. Die Nase 66 steht aus der Durchgangsöffnung hervor und wird von einer entsprechenden Ausnehmung des Schiebers 62 aufgenommen. Des Weiteren greifen jeweils radial äußere Bereiche der Schieber 62 und 64 an einer jeweiligen Oberfläche des elektronischen Datenträgers 4 an. Somit legen die Schieber 62 und 64 den elektronischen Datenträger 4 formschlüssig an der vorbestimmten Position fest.

Selbstverständlich sind auch andere Ausführungsformen der Positionierhilfe 10 denkbar, um den elektronischen Datenträger 4 an der vorbestimmten Position 4 in Bezug zu der ersten Formhälfte 34 zu halten.

Figur 17 zeigt einen Schnitt analog zum Schnitt A-A der Figur 3 und dient zur Erläuterung des Schritts 1504. In dem Schritt 1504 wird der elektronische Datenträger 4 weiterhin in der vorbestimmten Position zu der ersten Formhälfte 34 gehalten und die Lagen 8 und 6 werden um den elektronischen Datenträger 4 und die Positionierhilfe 10 herum angeordnet.

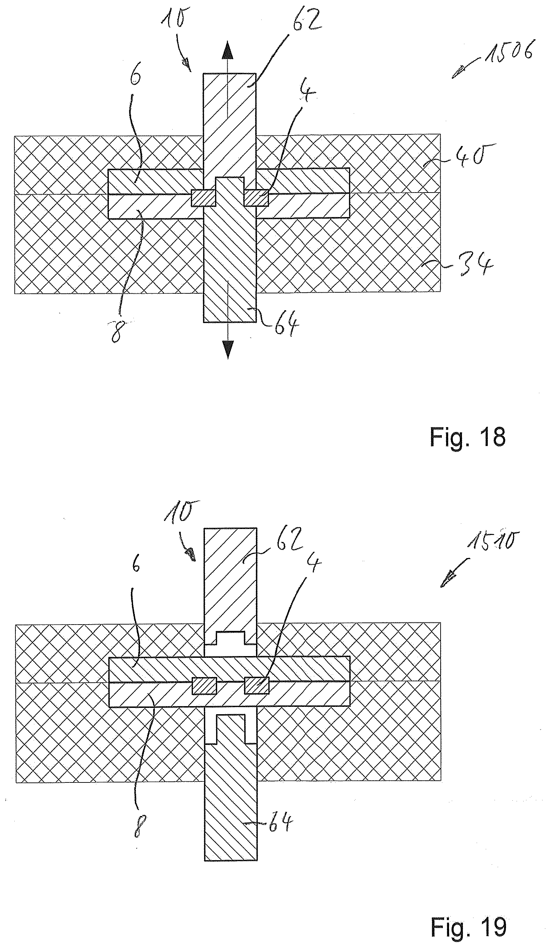

Figur 18 zeigt einen Schnitt analog zum Schnitt A-A der Figur 3 und dient zur Erläuterung des Schritts 1506. In dem Schritt 1506 findet die erste Formpressung bis zu dem ersten Vulkanisationsgrad statt. Ist der erste Vulkanisationsgrad erreicht, werden die Schieber 62 und 64, wie durch die voneinander wegweisenden Pfeile angedeutet, gemäß dem nachfolgenden Schritt 1508 voneinander weg und von dem Datenträger 4 wegbewegt.

Figur 19 zeigt einen Schnitt analog zum Schnitt A-A der Figur 3 und dient zur Erläuterung des Schritts 1510. In dem Schritt 1510 ist die Positionierhilfe 10 in Form der Schieber 62 und 64 von dem elektronischen Datenträger 4 entfernt und es findet ein zweites Formpressen bis zum zweiten Vulkanisationsgrad statt. Es ist gezeigt, dass sich der elektronische Datenträger 4 im Vergleich zu Figur 16 nicht aus der vorbestimmten Position heraus bewegt hat und damit die Schieber 62 und 64 der Positionierhilfe 10 eine Bewegung des Datenträgers 4 aus der vorbestimmten Position heraus begrenzt haben.

Die in dieser Beschreibung vorgestellten Fertigungsschritte werden mittels einer Fertigungsvorrichtung umfassend ein Formpress-Werkzeug durchgeführt. Entsprechend ist die Fertigungsvorrichtung zur Durchführung der Fertigungsschritte eingerichtet.

## Patentansprüche

1. Ein Verfahren zum Herstellen einer Elastomer-Membran (20), das Verfahren umfassend:
- Anordnen (101; 806; 404; 1204; 1502) eines elektronischen Datenträgers (4) zwischen zwei Lagen (6, 8) an einer vorbestimmten Position; und
- Formpressen (102; 810; 406; 1206; 1506, 1510) der zwei Lagen (6, 8) mit dem dazwischen angeordneten elektronischen Datenträger (4), **dadurch gekennzeichnet,**
**dass** der elektronische Datenträger (4) zumindest zeitweise mit einer Positionierhilfe (10) verbunden ist, und
**dass** die Positionierhilfe (10) ein Wandern des elektronischen Datenträgers (4) aus der vorbestimmten Position heraus während des Formpressens (102) begrenzt.

2. Das Verfahren nach dem Anspruch 1, wobei die Positionierhilfe (10) nach dem Formpressen (102; 810; 406; 1206) zumindest abschnittsweise in der Elastomer-Membran (20) verbleibt.

3. Das Verfahren nach dem Anspruch 1, wobei die Positionierhilfe (10) während des Formpressens (102; 1506, 1510) entfernt wird.

4. Das Verfahren nach einem der vorstehenden Ansprüche, wobei die Positionierhilfe (10) während des Formpressens (102; 406; 1206; 1506, 1510) zumindest zeitweise den elektronischen Datenträger (4) zu einem Formpress-Werkzeug festgelegt.

5. Das Verfahren nach dem Anspruch 2, wobei das Verfahren umfasst:
- Anordnen (802) des elektronische Datenträgers (4) zwischen zwei ersten Lagen (50, 52);
- Formpressen (804) der zwei ersten Lagen (50, 52) mit dem darin angeordneten elektronischen Datenträger (4) zu einer vorvulkanisierten Positionierhilfe (10);
- Anordnen (806) der vorvulkanisierten Positionierhilfe (10) zwischen den zwei zweiten Lagen (6, 8);
- Formpressen (810) der zwei zweiten Lagen (6, 8) mit der darin angeordneten vorvulkanisierten Positionierhilfe (10).

6. Das Verfahren nach den Ansprüchen 2 und 4, wobei das Verfahren umfasst:
- Anordnen (402) der Positionierhilfe (10) mit dem zur Positionierhilfe (10) festgelegten elektronischen Datenträger (6) zwischen den zwei Lagen (6, 8);
- Festlegen (404) der Positionierhilfe (10) in Bezug zu einem Formpress-Werkzeug derart, sodass sich der elektronische Datenträger (4) an der vorbestimmten Position befindet;
- Formpressen (406) der zwei Lagen (6, 8) mit der dazwischen angeordneten Positionierhilfe (10) zu einem Vulkanisat; und
- Abtrennen (408) eines Austriebs (42, 44) des Vulkanisats und eines Überstands (46, 48) der Positionierhilfe (10).

7. Das Verfahren nach dem Anspruch 6, wobei die Positionierhilfe (10) eine Kunststoff-Umspritzung des elektronischen Datenträgers (4) ist und den elektronischen Datenträger (4) zumindest abschnittsweise umgibt.

8. Das Verfahren nach dem Anspruch 6, wobei die Positionierhilfe (10) ein im Wesentlichen starres Leiterplattenmaterial, insbesondere ein Phenoplast, insbesondere ein Epoxidharz ist, und wobei der elektronische Datenträger (4) auf dem Leiterplattenmaterial angeordnet ist.

9. Das Verfahren nach Anspruch 2, wobei das Verfahren umfasst:
- Festlegen (1202) des elektronischen Datenträgers (4) zu einem Stützgewebe (58);
- Anordnen (1204) des Stützgewebes (58) und des damit verbundenen elektronischen Datenträgers (4) zwischen den zwei Lagen (6, 8);
- Formpressen (1206) der zwei Lagen (6, 8) mit dem dazwischen angeordneten Stützgewebe (58).

10. Das Verfahren nach dem Anspruch 9, wobei der elektronische Datenträger (4) zu dessen Festlegung auf das Stützgewebe (58) aufgeklebt wird.

11. Das Verfahren nach dem Anspruch 3, umfassend:
- Halten (1502) des elektronischen Datenträgers (4) an der vorbestimmten Position zu einem Formnest mittels der als Haltemittel ausgebildeten Positionierhilfe (10) ;
- Anordnen (1504) der zwei Lagen (6, 8) um den gehaltenen elektronischen Datenträger (4);
- erstes Formpressen (1506) der zwei Lagen (6, 8) mit dem dazwischen gehaltenen elektronischen Datenträger (4) bis zu einem ersten Vulkanisationsgrad,
- Entfernen (1508) der Positionierhilfe (10) von dem elektronischen Datenträger (4); und
- zweites Formpressen (1510) der zwei Lagen (6, 8) mit dem dazwischen befindlichen elektronischen Datenträger (4) bis zu einem zweiten Vulkanisationsgrad.

12. Das Verfahren nach dem Anspruch 11, wobei das die Positionierhilfe (10) zwei Halteschieber (62, 64) umfasst, welche zwischen dem ersten und zweiten Formpressen (1506, 1510) voneinander wegbewegt werden.

13. Das Verfahren nach einem der vorstehenden Ansprüche, wobei der elektronische Datenträger (4) in einem Bereich der Elastomer-Membran (20), insbesondere in einem Bereich einer von einer Schmalseite der Elastomer-Membran (20) abstehenden Lasche (2), angeordnet wird, welcher sich von einem Funktionsabschnitt (28) zum Stellen eines Prozessfluids und von einem Klemmabschnitt (24) zum Verklemmen der Elastomer-Membran (20) unterscheidet.

## Claims

1. A method of producing an elastomer diaphragm (20), the method comprising:
- arranging (101; 806; 404; 1204; 1502) an electronic data carrier (4) in a predetermined position between two layers (6, 8), and
- compression moulding (102; 810; 406; 1206; 1506, 1510) the two layers (6, 8) to the electronic data carrier (4) arranged therebetween, **characterised in that** the electronic data carrier (4) is connected to a positioning aid (10) at least for a time, and
**in that** the positioning aid (10) limits wander of the electronic data carrier (4) from the predetermined position during the compression moulding (102).

2. The method according to claim 1, wherein at least a portion or portions of the positioning aid (10) remain in the elastomer diaphragm (20) after the compression moulding (102; 810; 406; 1206).

3. The method according to claim 1, wherein the positioning aid (10) is removed during the compression moulding (102; 1506, 1510).

4. The method according to one of the preceding claims, wherein the positioning aid (10) fixes the electronic data carrier (4) in position relative to a compression moulding mould at least for a time during the compression moulding (102; 406; 1206; 1506, 1510).

5. The method according to claim 2, wherein the method comprises:
- arranging (802) the electronic data carrier (4) between two first layers (50, 52),
- compression moulding (804) the two first layers (50, 52) to the electronic data carrier (4) arranged therein to form a pre-vulcanised positioning aid (10),
- arranging (806) the pre-vulcanised positioning aid (10) between the two second layers (6, 8),
- compression moulding (810) the two second layers (6, 8) to the pre-vulcanised positioning aid (10) arranged therein.

6. The method according to claims 2 and 4, wherein the method comprises:
- arranging (402) the positioning aid (10), and the electronic data carrier (6) which is fixed in position relative to the positioning aid (10), between the two layers (6, 8),
- fixing (404) the positioning aid (10) in position relative to a compression moulding mould so that the electronic data carrier (4) is situated in the predetermined position,
- compression moulding (406) the two layers (6, 8) to the positioning aid (10) arranged therebetween to form a vulcanisate, and
- cutting off (408) of flash (42, 44) from the vulcanisate, and of projecting parts (46, 48) of the positioning aid (10).

7. The method according to claim 6, wherein the positioning aid (10) is a plastics material overmoulded to the electronic data carrier (4) and surrounds at least a portion or portions of the electronic data carrier (4).

8. The method according to claim 6, wherein the positioning aid (10) is a substantially rigid printed circuit board material, and in particular a phenolic plastics material and in particular an epoxy resin, and wherein the electronic data carrier (4) is arranged on the printed circuit board material.

9. The method according to claim 2, wherein the method comprises:
- fixing (1202) the electronic data carrier (4) in position relative to a supporting fabric (58),
- arranging (1204) the supporting fabric (58) and the electronic data carrier (4) connected thereto between the two layers (6, 8),
- compression moulding (1206) the two layers (6, 8) to the supporting fabric (58) arranged therebetween.

10. The method according to claim 9, wherein the electronic data carrier (4) is adhesive-bonded to the supporting fabric (58) to fix it in position.

11. The method according to claim 3, comprising:
- holding (1502) the electronic data carrier (4) in the predetermined position relative to a mould cavity by means of the positioning aid (10), which is in the form of holding means,
- arranging (1504) the two layers (6, 8) around the electronic data carrier (4) which is held,
- first compression moulding (1506) of the two layers (6, 8) to the electronic data carrier (4) held therebetween, to a first degree of vulcanisation,
- removal (1508) of the positioning aid (10) from the electronic data carrier (4), and
- second compression moulding (1510) of the two layers (6, 8) to the electronic data carrier (4) situated therebetween, to a second degree of vulcanisation.

12. The method according to claim 11, wherein the positioning aid (10) comprises two holding sliders (62, 64) which are moved away from one another between the first and second compression mouldings (1506, 1510).

13. The method according to one of the preceding claims, wherein the electronic data carrier (4) is arranged in a region of the elastomer diaphragm (20), and in particular in a region of a tab (2) projecting from a narrow side of the elastomer diaphragm (20), which region is distinguished from a functional portion (28) for controlling a process fluid and from a clamping portion (24) for clamping the elastomer diaphragm (20) in place.

## Revendications

1. Méthode de fabrication d'une membrane élastomère (20), la méthode comprenant les étapes consistant à:
- agencer (101; 806; 404; 1204; 1502) un support de données électronique (4) entre deux couches (6, 8) dans une position prédéterminée; et
- former sous pression (102; 810; 406; 1206; 1506, 1510) les deux couches (6, 8) avec le support de données électronique (4) agencé entre celles-ci, **caractérisée en ce que** le support de données électronique (4) est relié au moins temporairement à un dispositif d'aide au positionnement (10), et
**en ce que** le dispositif d'aide au positionnement (10) limite une migration du support de données électronique (4) hors de la position prédéterminée pendant le formage sous pression (102).

2. Méthode selon la revendication 1, dans laquelle le dispositif d'aide au positionnement (10), après le formage sous pression (102; 810; 406; 1206), reste au moins partiellement dans la membrane élastomère (20).

3. Méthode selon la revendication 1, dans laquelle le dispositif d'aide au positionnement (10) est retiré pendant le formage sous pression (102; 1506, 1510).

4. Méthode selon l'une quelconque des revendications précédentes, dans laquelle le dispositif d'aide au positionnement (10), lors du formage sous pression (102; 406; 1206; 1506, 1510), fixe au moins temporairement le support de données électronique (4) à un outil de formage sous pression.

5. Méthode selon la revendication 2, dans laquelle la méthode comprend les étapes consistant à:
- agencer (802) le support de données électronique (4) entre deux premières couches (50, 52);
- former sous pression (804) les deux premières couches (50, 52) avec le support de données électronique (4) agencé dans celles-ci par rapport à un dispositif d'aide au positionnement pré-vulcanisé (10);
- agencer (806) le dispositif d'aide au positionnement pré-vulcanisé (10) entre deux secondes couches (6, 8);
- former sous pression (810) les deux secondes couches (6, 8) avec le dispositif d'aide au positionnement pré-vulcanisé (10) agencé dans celles-ci.

6. Méthode selon les revendications 2 et 4, dans laquelle la méthode comprend les étapes consistant à:
agencer (402) le dispositif d'aide au positionnement (10) avec le support de données électronique (6) fixé au dispositif d'aide au positionnement (10) entre les deux couches (6, 8);
- fixer (404) le dispositif d'aide au positionnement (10) par rapport à un outil de formage sous pression de telle sorte que le support de données électronique (4) se trouve dans la position prédéterminée;
- former sous pression (406) les deux couches (6, 8) avec le dispositif d'aide au positionnement (10) agencé entre celles-ci jusqu'à un vulcanisat; et
- séparer (408) une excroissance (42, 44) du vulcanisat et une saillie (46, 48) du dispositif d'aide au positionnement (10).

7. Méthode selon la revendication 6, dans laquelle le dispositif d'aide au positionnement (10) est un enrobage en matière plastique du support de données électronique (4) et entoure le support de données électronique (4) au moins partiellement.

8. Méthode selon la revendication 6, dans laquelle le dispositif d'aide au positionnement (10) est un matériau de carte à circuit imprimé sensiblement rigide, en particulier un phénoplaste, en particulier une résine époxy, et dans laquelle le support de données électronique (4) est agencé au niveau du matériau de carte à circuit imprimé.

9. Méthode selon la revendication 2, dans lequel la méthode comprend les étapes consistant à:
- fixer (1202) le support de données électronique (4) à un tissu de support (58);
- agencer (1204) le tissu de support (58) et le support de données électronique (4) associé à celui-ci entre les deux couches (6, 8);
- former sous pression (1206) les deux couches (6, 8) avec le tissu de support (58) agencé entre celles-ci.

10. Méthode selon la revendication 9, dans laquelle le support de données électronique (4) est collé à sa fixation au tissu de support (58).

11. Méthode selon la revendication 3, comprenant les étapes consistant à:
- maintenir (1502) le support de données électronique (4) dans la position prédéterminée par rapport à une cavité de filière au moyen du dispositif d'aide au positionnement (10) réalisé en tant que moyen de maintien;
- agencer (1504) les deux couches (6, 8) autour du support de données électronique maintenu (4);
- effectuer un premier formage sous pression (1506) des deux couches (6, 8) avec le support de données électronique (4) maintenu entre celles-ci jusqu'à un premier degré de vulcanisation,
- retirer (1508) le dispositif d'aide au positionnement (10) à partir du support de données électronique (4); et
- effectuer un second formage sous pression (1510) des deux couches (6, 8) avec le support de données électronique (4) se trouvant entre celles-ci jusqu'à un second degré de vulcanisation.

12. Méthode selon la revendication 11, dans laquelle le dispositif d'aide au positionnement (10) comprend deux coulisseaux de retenue (62, 64) qui sont éloignés l'un de l'autre entre les premier et second formages sous pression (1506, 1510).

13. Méthode selon l'une quelconque des revendications précédentes, dans laquelle le support de données électronique (4) est agencé dans une région de la membrane élastomère (20), en particulier dans une région d'une languette (2) dépassant à partir d'un côté étroit de la membrane élastomère (20), laquelle diffère d'une section fonctionnelle (28) destinée à ajuster un fluide de traitement et d'une section de serrage (24) destinée à serrer la membrane élastomère (20).
